# EUROPEAN PATENT SPECIFICATION

(11) **EP 0 740 490 B1**
(45) Date of publication and mention of the grant of the patent: **06.06.2001**
(21) Application number: 95930023.7
(22) Date of filing: 31.08.1995
(51) Int. Cl.: H05B 33/14, C09K 11/00, C09K 11/62, C09K 11/64

(54) **THIN-FILM ELECTROLUMINESCENT ELEMENT**
ELEKTROLUMINESZENTESDÜNNSCHICHTELEMENT
ELEMENT ELECTROLUMINESCENT A COUCHE MINCE

(30) Priority: 14.11.1994 JP 30272594
(43) Date of publication of application: 30.10.1996
(73) Proprietor: Mitsui Mining and Smelting Co., Ltd, Shinagawa-ku, Tokyo (JP); SHARP KABUSHIKI KAISHA, Osaka-shi, Osaka-fu 545-0013 (JP)
(72) Inventor: SUGIOKA, Akiko-Mitsui Min.& Smelting R & D Cent., Saitama 362 (JP); TAKAHASHI, Noriyuki-Mitsui Min.& Smelting Corp., Saitama 362 (JP); YASHIMA, Isamu-Mitsui Min.& Smelt. Corp. R&D Cen., Saitama 362 (JP); HIGUCHI, Makoto-Kamioka Min. & Smelting Co. Ltd., Yoshiki-gun-Gifu 506-11 (JP); MIKAMI, Akiyoshi-Sharp Kabushikikaisha, Osaka 545 (JP); TERADA, Kousuke-Sharp Kabushikikaisha, Osaka 545 (JP); OKADA, Katsuhiro-Sharp Kabushikikaisha, Osaka 545 (JP)
(74) Representative: Modiano, Guido, Dr.-Ing.
(86) International application number: JP9501739
(87) International publication number: WO9615648

(56) References cited:
- EP-A- 0 667 383
- JP-A- 4 121 992
- JP-A- 5 065 478
- JP-A- 7 242 869
- JP-A- 63 218 194
- DATABASE WPI Section Ch, Week 9622 Derwent Publications Ltd., London, GB; Class L03, AN 96-219175 XP002019489 & JP-A-08 083 685 (SHARP KK) , 26 March 1996
- APPLIED PHYSICS LETTERS, vol. 63, no. 14, 4 October 1993, pages 1954-1956, XP000397851 BENALLOUL P ET AL: "IIA-II2-S4 TERNARY COMPOUNDS: NEW HOST MATRICES FOR FULL COLOR THIN FILM ELECTROLUMINESCENCE DISPLAYS"
- MATERIALS SCIENCE AND ENGINEERING B, vol. B14, no. 4, 1 September 1992, pages 393-397, XP000359265 LE THI K T ET AL: "INVESTIGATION OF THE MS-AL2S3 SYSTEMS (M=CA, SR, BA) AND LUMINESCENCE PROPERTIES OF EUROPIUM-DOPED THIOALUMINATES"
- JOURNAL OF SOLID STATE CHEMISTRY, DEC. 1989, USA, vol. 83, no. 2, ISSN 0022-4596, pages 316-323, XP002019488 DAVOLOS M R ET AL: "Luminescence of Eu/sup 2+/ in strontium and barium thiogallates"
- DATABASE WPI Section Ch, Week 7828 Derwent Publications Ltd., London, GB; Class L03, AN 78-50468A XP002019490 & JP-A-53 061 964 (DAINIPPON TORYO KK) , 2 June 1978

## Description

### [Technical Field]

This invention relates to an electro-luminescence device (hereinafter abbreviated to "EL" device) luminescing by the application thereto of an electric field and more particularly to a thin film EL material useful in the thin film luminescence layer of the device and a thin film EL device using said material therein.

### [Prior Art]

Studies of red color-, green color- and blue color-emitting EL materials are in progress to attain the full coloration of a thin film EL panel. However, there has not been obtained yet any satisfactory blue color-emitting material exhibiting high luminance and excellent chromatic purity (excitation purity). One of the most advanced blue color-emitting materials is SrS:Ce and has recently been developed to have remarkably improved luminance and chromatic purity. However, it is anticipated from, for example, the size of the site for Ce as a substituent that the luminescence peak of SrS:Ce is not shifted to the side of a wavelength shorter than about 480 nm and therefore SrS:Ce does not emit pure blue-colored light. Further, SrS itself exhibits deliquescence and requires heating at 1400°C or above and the like to be completely synthesized, thereby to constitute a barrier to the industrial production thereof.

Known from EP-A-0667383 is a phosphor layer for an AC TFEL device having the chemical formula M(II)M(III)₂X₄:RE where M(II) is a group II metal taken from the group consisting of magnesium, calcium, strontium and barium, M(III) is a group III metal taken from the group consisting of aluminium, gallium and indium, X is taken from the group consisting of sulphur and selenium, and RE comprises a rare earth activator dopant taken from the group consisting of cerium and europium. The same document, also discloses a multi-source reactive deposition process for preparing a blue light emitting thin phosphor film and a film of SrAl₂S₄:Ce.ll

JP-A-53061964 discloses a green emission phosphor with four sulphur atoms, doped with europium, which comprises a sulphide represented by the formula

(Sr_{1-x,} Caₓ)S · yGa₂S₃:zEu²⁺

wherein x, y and z are 0≤x≤0.5. 0.8≤y≤1.4 and 10⁻⁴≤z≤5x10⁻¹, respectively. This phosphor is indicated as suitable for a green-emission ingredient of a colour cathode-ray tube

A thin film EL device using MGa₂S₄:Ce therein (wherein M is an alkaline earth metal) has recently been developed and attracts attention since it exhibits highluminance and luminesces at a shorter wavelength (Japanese Pat. Appln. Laid-Open gazette No. Hei. 5-65478). Further, Davlous et al. reported that strontium thiogallate and barium thiogallate each having Eu²⁺ added thereto luminesce mainly in the blue-color region [J. Solid. State Chem. 83, 316 (1989)]. Additionally, LeThi et al. reported that alkaline earth metal thioaluminates each having Eu²⁺ added thereto luminesce mainly in the green-color region [Mat. Sci. Eng. B14 (1992) 393]. As compared with SrS, such thiogallates and thioaluminates have an advantage that their synthesis temperature is generally as low as about 1100°C, this being industrially superior. The thioaluminate corresponds to a compound prepared by replacing the gallium of the thiogallate by aluminum, and the site for a lanthanoid element as a substituent (in other words, the site for an alkaline earth metal) in the thioaluminate tends to be generally larger than that in the thiogallate. Accordingly, it is thought that the emission spectrum of the thioaluminate is shifted to a shorter wavelength side thereby to emit purer blue particularly when the thioaluminate contains Eu or Ce as a substituent.

However, there has not been obtained as yet any satisfactory blue-emitting thin film EL device which is more excellent in chromatic (excitation) purity and chromaticity coordinates.

### [DISCLOSURE OF THE INVENTION]

An object of this invention is to provide a thin film EL material from which a blue-emitting body for EL is obtained and which is excellent in chromaticity coordinates and easily producible industrially production can be produced and also to provide a thin film EL device comprising a luminescence layer made from said material.

The above object can be attained by providing a thin film EL material which will now be described below.

More particularly, this invention resides in a thin film EL material comprising an alkaline earth metal thiogallate represented by the following compositional formula:

(M¹S)ₐ(Ga₂S₃)_{b}:Ce

(wherein M¹ is Sr or Ba:
and a and b are integers which are different from each other).

In the above formula, as described above, M¹ represents strontium (Sr) or barium (Ba);

Although a and b are each an integer, they are different from each other.

As described above, this invention resides in a thin film EL material comprising the above alkaline earth metal thiogallate as the matrix and
cerium as the dopant (luminescence center). Examples of the composition of such a thin film electro-luminescence material are BaGa₄S₇:Ce, Ba₃Ga₂S₆:Ce and Sr₂Ga₂S₅:Ce. Additionally, it is preferable that the thin film EL material of this invention further contain a charge compensation agent such as potassium.

Such a thin film EL material can be produced by, e.g., the following process. More particularly, it is produced by mixing SrCO₃ or BaCO₃ with Ga₂O₃ in a proper molar ratio, adding CeF₃ as a material for the dopant and KCL as a material for the charge compensation agent to the obtained mixture and then firing the whole thus obtained at 900 to 1100°C in a H₂S atmosphere. Of course, SrS, BaS, Ga₂S₃, CeO₂ and the like may be used instead of the above raw materials and material for the charge compensation agent is not limited to potassium but may be any compound which may give a monovalent cation having a proper ion radius. Alternatively, the charge compensation agent may be a trivalent anion having a proper ion radius.

This invention also resides in a thin film EL material characterized by being composed of an alkaline earth metal thioaluminate represented by the following compositional formula:

(M²S)_{c}(Al₂S₃)_{d}:Ce

[wherein M² is Ca, Sr or Ba;
and c and d are integers which are
different from each other].

In the above formula, as described above. M² represents calcium (Ca), strontium (Sr) or barium (Ba);

Further, c and d are each an integer and they are different from each other.

As described above, this invention also resides in a thin film EL material comprising the above alkaline earth metal thioaluminate as the matrix material and cerium as the dopant (luminescence center). Examples of such a thin film EL material are Ca₂Al₂S₅. BaAl₄S₇, Ba₄Al₂S₇, Ba₅Al₂S₈, Sr₂Al₂S₅ and Ba₂Al₂S₅.

Such a thin film EL material can be produced by, e.g. the following process. Namely, it is produced by sulfuretting CaCO₃, SrCO₃, BaCO₃, or the like under suitable conditions to obtain CaS, SrS. BaS or the like, mixing the alkaline earth metal sulfide with Al₂S₃ in a proper molar ratio, adding CeCl₃ as a dopant material to the resulting mixture and then firing the whole thus obtained at 900 to 1000°C in a H₂S atmosphere. Of course, Al₂O₃. CeO₂, CeF₃. Ce₂F₃.
and the like may be used instead of the above compounds as starting materials. Alternatively, a mixture preliminarily prepared by mixing an alkaline earth metal compound with an aluminum compound may be sulfuretted at one time. Furthermore, when Ce is used as a dopant, the co-addition of a monovalent cation (such as K or Na) having a proper ion radius and a trivalent anion as charge compensation agents increases the resulting EL material in intensity of luminescence.

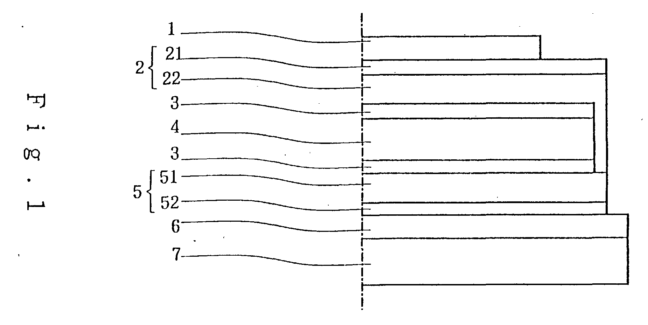

The thin film EL device of this invention is one comprising a luminescence layer made from the above thin film EL material. Fig. 1 shows an example of the constitution of such a thin film EL device. In Fig. 1, numeral 1 refers to an upper electrode (rear electrode) made of Al or the like, 2 (21 and 22) an upper insulating layer, 3 a buffer layer, 4 a luminescence layer, 5 (51 and 52) a lower insulating layer, 6 a lower electrode (transparent electrode) made of ITO (In₂O₃-SnO₂) and 7 a glass substrate.

The thin film EL device shown in Fig. 1 is a double-insulated one in which the luminescence layer is sandwiched in between the upper and lower insulating layers (films) and which has a structure produced by stacking one upon another a lower electrode (transparent electrode), a lower insulating layer, a buffer layer, a luminescence layer, a buffer layer, an upper insulating layer and an upper electrode (rear electrode) on a glass substrate in said order. An ITO film is used as the transparent electrode, which can be formed into a film having a thickness of about 20 nm by an electron beam (EB) vapor deposition or high frequency sputtering method. The lower insulating layer can be formed by making SiO₂ grow by a high frequency sputtering method and then making Si₃N₄ grow on the SiO₂ layer in a stacked state. Although the luminescence layer may be formed by an EB evaporation method, a high-frequency sputtering method or the like. In Example 4 which will be described later, the luminescence layer was formed by sputtering at a substrate temperature of 100 to 150°C in an Ar gas atmosphere containing 8% of hydrogen sulfide. A Si₃N₄ layer and a SiO₂ layer are formed by high-frequency sputtering as the upper insulating layer, followed by heat treatment to 630 to 700°C in a vacuum for about one hour to further form on said layer an upper electrode made of Al or the like by vacuum vapor deposition.

The upper insulating layer 2 is composed of a SiO₂ layer 21 and a Si₃N₄ layer 22, while the lower insulating layer 5 is composed of a Si₃N₄ layer 51 and a SiO₂ layer 52. The thicknesses of the foregoing layers are, e.g., as follows: SiO₂ layer 21, 0.005 um; Si₃N₄ layer 22, 0.12 µm; buffer layer 3, 0.1 µm; luminescence layer 4, 0.6 µm; Si₃N₄ layer 51, 0.2 µm; and SiO₂ layer 52, 0.05 µm.

### [BRIEF DESCRIPTION OF THE DRAWINGS]

Fig. 1 is a schematic view showing the constitution of a thin film EL device of this invention;
Fig. 2 is a graph showing the photo-luminescence of BaGa₄S₇:Ce,K, a material for an EL device;
Fig. 3 is a graph showing the electro-luminescence of a BaGa₄S₇:Ce, K thin film EL device;
Fig. 4 is a graph showing the photo-luminescence of Ba₃Ga₂S₆:Ce,K, a material for an EL device;
Fig. 5 is a graph showing the photo-luminescence of Sr₂Ga₂S₅:Ce,K, a material for an EL device;
Fig. 6 is a graph showing the electro-luminescence of a Sr₂Ga₂S₅:Ce,K thin film EL device;
Fig. 7 is a chromaticity diagram showing the chromaticity coordinates of a Sr₂Ga₂S₅:Ce,k thin film EL device, a BaGa₄S₇:Ce,K thin film EL device and a SrS:Ce thin film EL device;

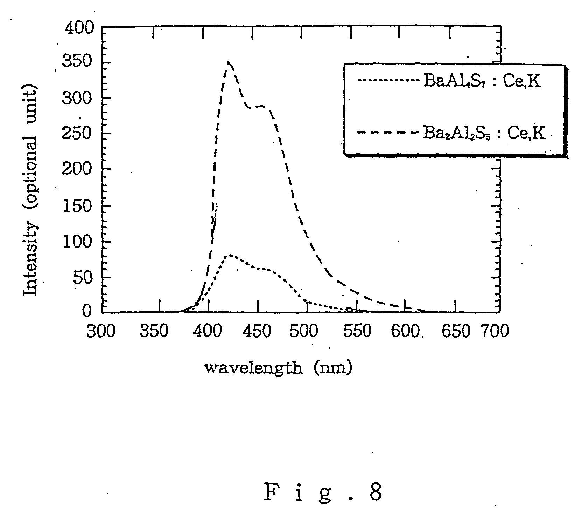

Fig. 8 shows the emission spectra of thioaluminates according to this invention wherein M₂ is Ba (Ce and K added); and
Fig. 9 shows the emission spectra of thioaluminates according to this invention wherein M₂ is Sr (Ce and K added).

### [Example]

This invention will now be illustrated by referring to the following Examples.

### Example 1

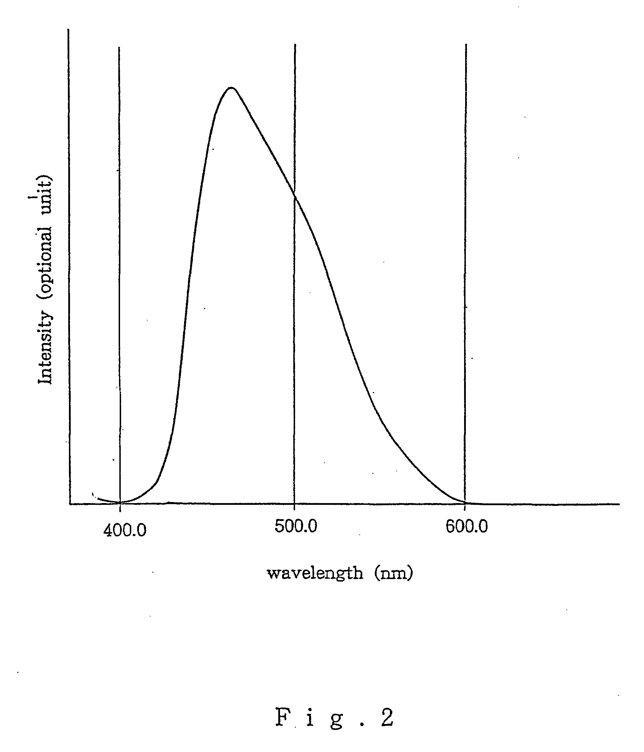

A mixture composed of BaCO₃ and Ga₂O₃ in a molar ratio of 1 : 2 was provided as a starting material, heated to 900°C in a H₂S atmosphere for 5 hours and then screened to adjust particle sizes. The resulting material was heated to 1000°C in a H₂S atmosphere for 5 hours, again screened to adjust-particle sizes and then incorporated with CeF₃ and KCl each in an amount of 10 mol %. The mixture thus obtained was heated to 1100°C in a H₂S atmosphere for 5 hours. The compound (BaGa₄S₇:Ce,K) thus obtained was excited at 374 nm to present photo-luminescence which is shown in Fig. 2. It can be understood from Fig. 2 that the photo-luminescence has a peak in the neighborhood of 460 nm.

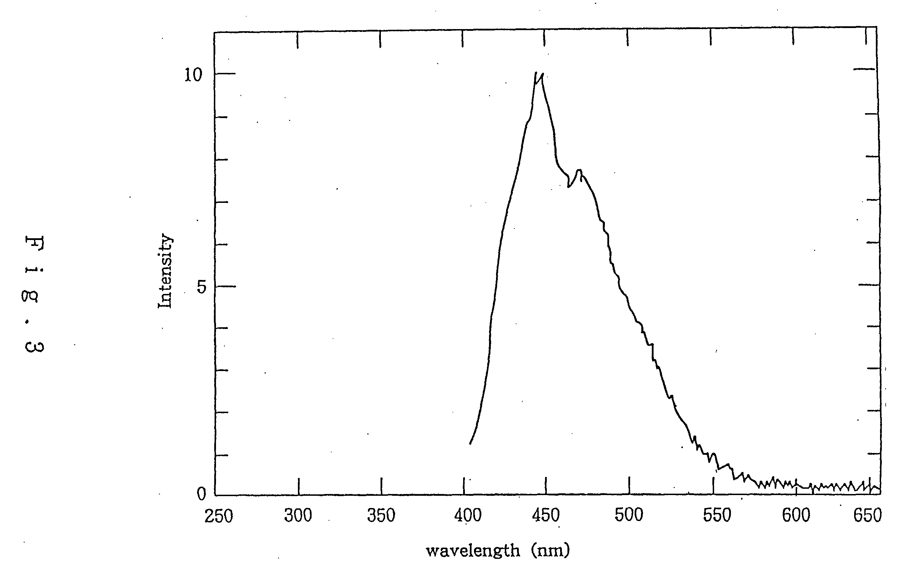

Further, a thin film luminescence layer made of the above compound and an insulating layer were formed under the conditions specified in Table 1, after which a thin film EL device as shown in Fig. 1 was produced. This device exhibited blue electro-luminescence which is indicated in Fig. 3. The chromaticity coordinates of the electro-luminescence are: X = 0.153 and Y = 0.136. The luminance was 0.7 cd/m² when the device was driven at 1 kHz.

**Table 1**

| Film-forming conditions | Luminescence layer | Insulating layer (si₃N₄) |
|---|---|---|
| method of growth | high-frequency magnetron sputtering method | |
| sputtering gas | H₂S (5%) + Ar (95%) | |
| pressure of gas (Pa) | 2 | 0.8 |
| substrate temp. (°C) | 100 ∼ 300 | 250 |
| sputtering electric power (W) | 150 | 750 |
| rate of growth (A/min) | 50 | 100 |
| target size (mm) | 80⌀ | 250⌀ |

### Example 2

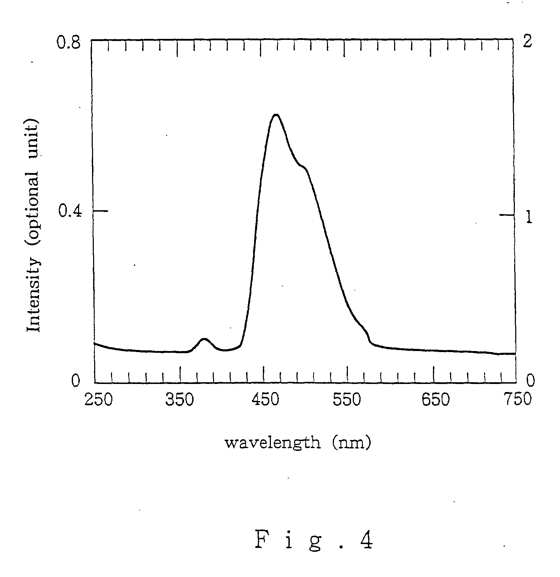

A mixture composed of BaCO₃ and Ga₂O₃ in a molar ratio of 3 : 1 as a starting material was heated to 900°C in a H₂S atmosphere for 5 hours. The mixture so heated was screened to adjust particle sizes. The resulting material was heated to 1000°C in a H₂S atmosphere for 5 hours, again screened to adjust particle sizes, thereafter incorporated with CeF₃ and KCl in respective amounts of 1 mol % and 0.1 mol % and then further heated to 1100°C in a H₂S atmosphere for 5 hours. The photo-luminescence of the thus obtained compound (Ba₃Ga₂S₆:Ce,K) is shown in Fig. 4. It can be understood from Fig. 4 that the photo-luminescence has a peak in the neighborhood of 470 nm.

### Example 3

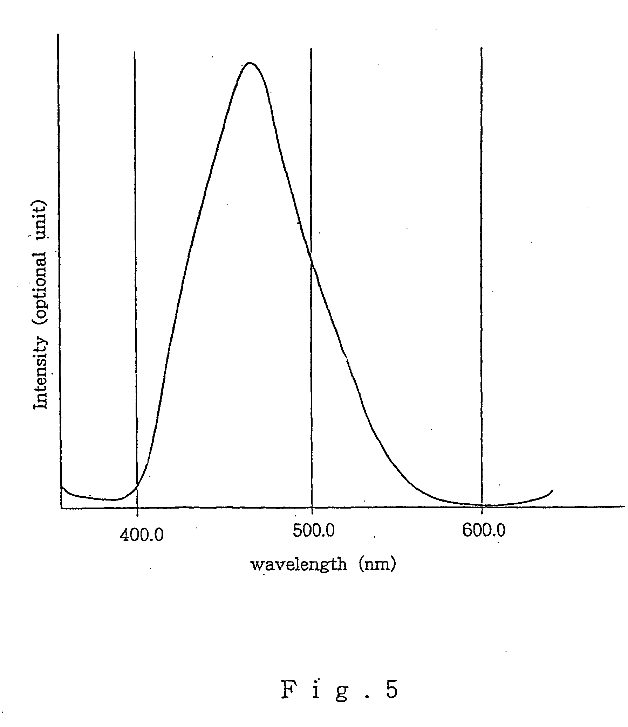

A mixture composed of SrCO₃ and Ga₂O₃ in a molar ratio of 2 : 1 as a starting material was heated to 880°C in a H₂S atmosphere for 5 hours and then adjusted in particle sizes by screening. The resulting material was heated to 880°C in a H₂S atmosphere for 5 hours, thereafter again screened to adjust particle sizes, incorporated with CeF₃ and KCl each in an amount of 10 mol % and then further heated to 880°C in a H₂S atmosphere for 5 hours. The photo-luminescence of the thus obtained compound (Sr₂Ga₂S₅:Ce,K) is shown in Fig. 5, from which it can be understood that the photo-luminescence has a peak in the neighborhood of 460 nm.

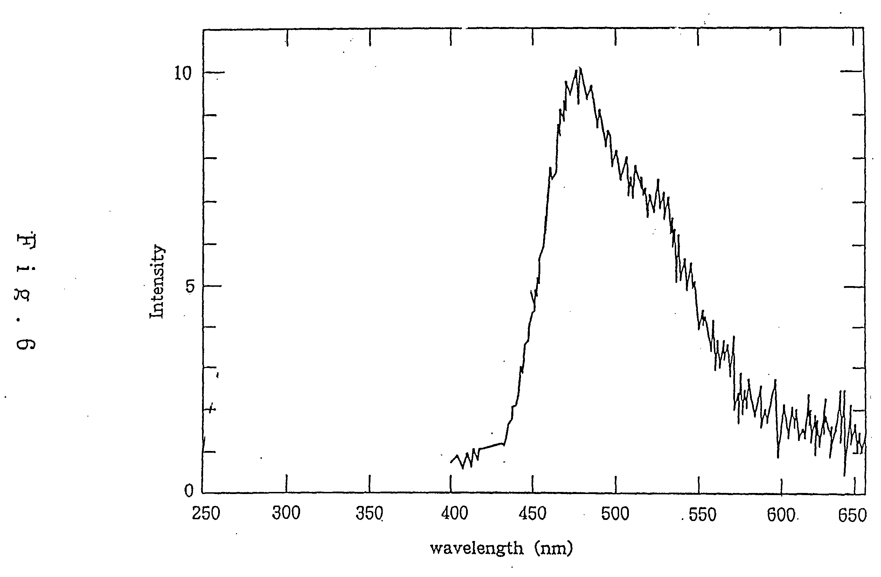

A thin film luminescence layer made of the above compound and an insulating layer were formed under the conditions specified in Table 1, and, further, a thin film EL device as shown in Fig. 1 was produced. This device exhibited blue electro-luminescence, which is shown in Fig. 6. The chromaticity coordinates of the electro-luminescence are: X = 0.22 and Y = 0.346. The luminance was 2.4 cd/m² when the device was driven at 1 kHz.

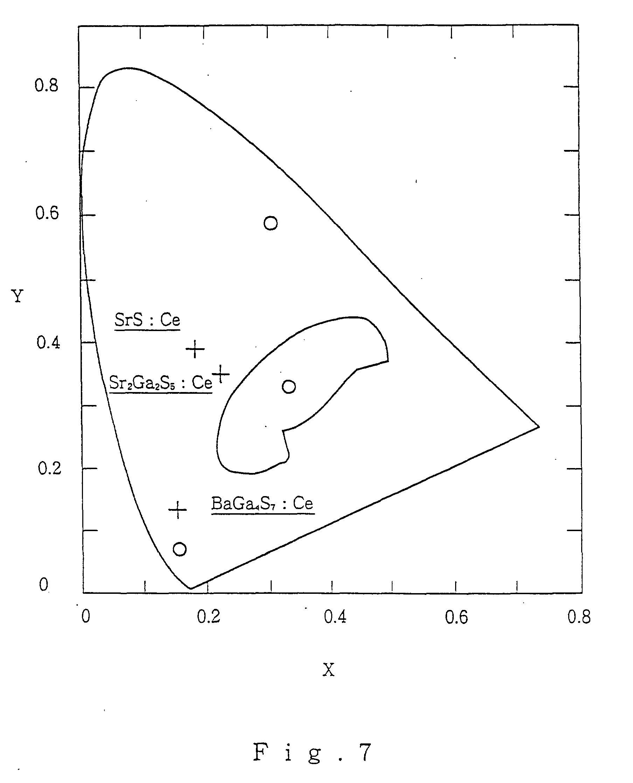

Fig. 7 shows the chromaticity coordinates (X = 0.153, Y = 0.136) of the BaGa₄S₇:Ce.K thin film EL device produced in Example 1, those (X = 0.22, Y = 0.346) of the Sr₂Ga₂S₅:Ce,K thin film EL device produced in Example 3 and those (X = 0.18, Y = 0.38) of a SrS:Ce thin film EL device for reference.

### Example 4

BaCO₃ as a starting material was heated in a H₂S atmosphere to 500°C for 2 hours, to 600°C for 2 hours and then to 900°C for 4 hours, followed by screening to adjust particle sizes. The resulting material was heated to 1000°C in a H₂S atmposphere for 4 hours, followed by screening to again adjust particle sizes thus obtaining BaS. The BaS thus obtained was mixed with Al₂S₃. CeCl₃ and KCl in molar ratios specified in Table 2 and then the obtained mixtures were each heated to 1000°C in a H₂S atmosphere for 5 hours.

**Table 2**

| | molar ratio | | mol % | |
|---|---|---|---|---|
| | BaS | Al₂S₃ | CeCl₃ | KCl |
| BaAl₄S₇:Ce,K | 1 | 2 | 1 | 1 |
| Ba₂Al₂S₅:Ce,K | 2 | 1 | 1 | 1 |

The obtained compounds (BaAl₄S₇:Ce,K, Ba₂Al₂S₅:Ce,k,
were excited at a proper wavelength between 280 and 350 nm and the emission spectra observed in this case are given in Fig, 8, It can be understood from Fig. S that the spectra have their respective peaks mainly in the blue region.

### Example 5

SrS was mixed with Al₂S₃ while CeCl₃ and KCl were also mixed, in respective molar ratios specified in Table 4, after which the obtained mixtures were each heated to 1000°C in a H₂S atmosphere for 5 hours thereby to obtain compound

Sr₂Al₂S₅:Ce,K.

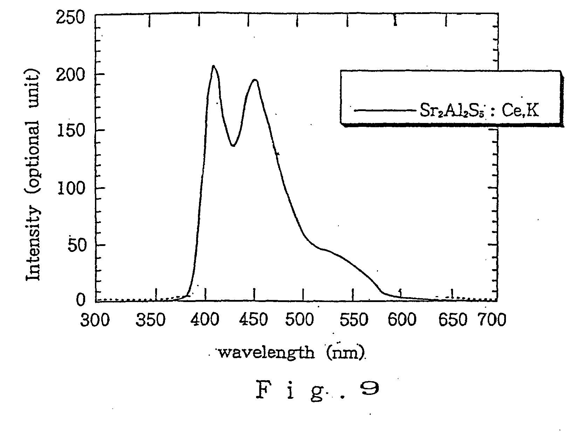

The compounds so obtained were excited at a proper wavelength from 280 to 350 nm and the emission spectra observed in this case are given in Fig. 9.

**Table 4**

| | molar ratio | | mol % | |
|---|---|---|---|---|
| | SrS | Al₂S₃ | CeCl₃ | KCl |
| Sr Al₄S₇: Ce.K | 1 | 2 | 1 | 1 |

### [Industrial Applicability]

It has been confirmed in this invention that the emission peaks of BaAl₄S₇:Ce,K, Ba₂Al₂S₅:Ce,K and so on appear in the neighborhood of 430 nm. The wavelengths of emission peaks thereof are shorter than those (480 nm) of SrS:Ce and those (460 nm) of MGa₂S₄:Ce (wherein M is an alkaline earth metal) by as much as 50 to 30 nm.

As described above, this invention makes it possible to obtain a thin film EL material excellent in chromaticity coordinates and chromatic purity, and a thin film EL device comprising said material as the luminescence layer.

## Claims

1. A thin film electro-luminescence material, characterized in that said material comprises an alkaline earth metal thiogallate represented by the following compositional formula:
(M¹S)ₐ(Ga₂S₃)_{b}: Ce
wherein M¹ is Sr or Ba, and a and b are integers which are different from each other.

2. The thin film electro-luminescence material according to claim 1, wherein said alkaline earth metal thiogallate is represented by the formula of BaGa₄S₇:Ce.

3. The thin film electro-luminescence material according to claim 1, wherein said alkaline earth metal thiogallate is represented by the formula of Ba₃Ga₂S₆:Ce.

4. The thin film electro-luminescence material according to claim 1, wherein said alkaline earth metal thiogallate is represented by the formula of Sr₂Ga₂S₅:Ce.

5. A thin film electro-luminescence material, characterized in that said material comprises an alkaline earth metal thioaluminate represented by the following compositional formula:
(M²S)_{c}(Al₂S₃)_{d}: Ce
wherein M² is Ca, Sr or Ba, and c and d are integers which are different from each other.

6. The thin film electro-luminescence material according to claim 5, wherein the alkaline earth metal thioaluminate is a member selected from the group consisting of BaAl₄S₇:Ce, Sr₂Al₂S₅:Ce and Ba₂Al₂S₅:Ce.

7. A thin film electro-luminescence device comprising any one of the thin film electro-luminescence materials of claims 1 to 6 as a luminescence layer.

## Patentansprüche

1. Ein Dünnfilm-Elektrolumineszenzmaterial, dadurch gekennzeichnet, daß das Material ein Erdalkalimetall-thiogallat enthält, das durch die folgende Zusammensetzungsformel dargestellt wird:
(M¹S)ₐ(Ga₂S₃)_{b}:Ce
worin M¹ Sr oder Ba ist, und a und b ganze, sich voneinander unterscheidende Zahlen sind.

2. Das Dünnfilm-Elektrolumineszenzmaterial gemäß Anspruch 1, worin das Erdalkalimetall-thiogallat durch die Formel BaGa₄S₇:Ce dargestellt wird.

3. Das Dünnfilm-Elektrolumineszenzmaterial gemäß Anspruch 1, worin das Erdalkalimetall-thiogallat durch die Formel Ba₃Ga₂S₆:Ce dargestellt wird.

4. Das Dünnfilm-Elektrolumineszenzmaterial gemäß Anspruch 1, worin das Erdalkalimetall-thiogallat durch die Formel Sr₂Ga₂S₅:Ce dargestellt wird.

5. Ein Dünnfilm-Elektrolumineszenzmaterial, dadurch gekennzeichnet, daß das Material ein Erdalkalimetall-thioaluminat enthält, das durch die folgende Zusammensetzungsformel dargestellt wird:
(M²S)_{c}(Al₂S₃)_{d}:Ce
worin M² Ca, Sr oder Ba ist, und c und d ganze, sich voneinander unterscheidende Zahlen sind.

6. Das Dünnfilm-Elektrolumineszenzmaterial gemäß Anspruch 5, worin das Erdalkalimetall-thioaluminat gewählt ist aus der Gruppe bestehend aus BaAl₄S₇:Ce; Sr₂Al₂S₅:Ce und Ba₂Al₂S₅:Ce.

7. Eine Dünnfilm-Elektrolumineszenz-Vorrichtung, die irgendeines der Dünnfilm-Elektrolumineszenzmaterialien nach den Ansprüchen 1 bis 6 als eine Leuchtschicht umfaßt.

## Revendications

1. Matière électroluminescente à couche mince,
caractérisée en ce que ladite matière comprend un thiogallate de métal alcalino-terreux représenté par la formule de composition suivante :
(M¹S) ₐ (Ga₂S₃)_{b} : Ce
dans laquelle M¹ est Sr ou Ba, et a et b sont des nombres entiers qui sont différents l'un de l'autre.

2. Matière électroluminescente à couche mince selon la revendication 1, dans laquelle ledit thiogallate de métal alcalino-terreux est représenté par la formule de BaGa₄S₇ : Ce.

3. Matière électroluminescente à couche mince selon la revendication 1, dans laquelle ledit thiogallate de métal alcalino-terreux est représenté par la formule de Ba₃Ga₂S₆ : Ce.

4. Matière électroluminescente à couche mince selon la revendication 1, dans laquelle ledit thiogallate de métal alcalino-terreux est représenté par la formule de Sr₂Ga₂S₅ : Ce.

5. Matière électroluminescente à couche mince,
caractérisée en ce que ladite matière comprend un thioaluminate de métal alcalino-terreux représenté par la formule de composition suivante :
(M²S)_{c}(Al₂S₃)_{d} : Ce
dans laquelle M² est Ca, Sr ou Ba, et c et d sont des nombres entiers qui sont différents l'un de l'autre.

6. Matière électroluminescente à couche mince, selon la revendication 5, dans laquelle le thioaluminate de métal alcalino-terreux est un élément choisi à partir du groupe constitué de BaAl₄S₇ : Ce, Sr₂Al₂S₅ : Ce et Ba₂Al₂S₅ : Ce.

7. Dispositif électroluminescent à couche mince comprenant l'une quelconque des matières électroluminescentes à couche mince des revendications 1 à 6 comme couche luminescente.
